# EUROPEAN PATENT SPECIFICATION

(11) **EP 3 994 014 B1**
(45) Date of publication and mention of the grant of the patent: **16.08.2023**
(21) Application number: 20740425.2
(22) Date of filing: 24.06.2020
(51) Int. Cl.: B60C 23/04

(54) **TYRE COMPRISING A MONITORING DEVICE**
REIFEN MIT EINER ÜBERWACHUNGSVORRICHTUNG
PNEU COMPRENANT UN DISPOSITIF DE SURVEILLANCE

(30) Priority: 04.07.2019 IT 201900010899
(43) Date of publication of application: 11.05.2022
(73) Proprietor: Pirelli Tyre S.p.A., 20126 Milano (IT)
(72) Inventor: BOSCAINO, Ivan Gildo, 20126 MILANO (IT); NATTA, Andrea, 20126 MILANO (IT); PUPPI, Cristiano, 20126 MILANO (IT); RUBINGH, Jan-Eric Jack Martijn, 5665 EC Geldrop (NL)
(74) Representative: Tirloni, Bartolomeo
(86) International application number: PCT/IT2020/050156
(87) International publication number: WO 2021/001862

(56) References cited:
- EP-A2- 0 906 839
- DE-A1-102007 014 097
- US-A1- 2018 257 442
- POWERSTREAM: "Thin (1 mm to 2mm) to Ultrathin (0.5 mm) Rechargeable Lithium Polymer Cells from PowerStream", , 15 April 2019 (2019-04-15), XP055666030, Retrieved from the Internet: URL:https://web.archive.org/web/2019041513 3744/https://www.powerstream.com/thin-lith ium-ion.htm [retrieved on 2020-02-06]

## Description

### Technical field of the invention

The present invention relates to a tyre comprising a monitoring device, for example suitable for detecting at least one physical quantity among temperature, pressure, deformation and acceleration.

### State of the art

Typically a tyre has a substantially toroidal structure around an rotation axis thereof during operation, and it has an equatorial plane perpendicular to the rotation axis, said equatorial plane being typically a plane of (substantial) geometric symmetry (e.g. ignoring any minor asymmetries, such as the tread design and/or the writing on the sides and/or structure or profile asymmetries).

With "inner cavity" it is meant the space delimited by the inner surface of tyre and by the surface of the rim which faces towards the inner surface of the tyre, when fitted. With "crown portion" it is meant the portion of tyre placed at the tread band.

The terms "radial" and "axial" are used with reference respectively to a perpendicular direction and to parallel direction to the rotation axis of the tyre.

The term "tangential" is used with reference to a direction generally oriented according to the rolling direction of the tyre, perpendicular to both the radial direction and the axial direction.

With "footprint" it is meant the portion of outer surface of the tread band which, during the rolling of the tyre fitted and subjected to a load (for example due to effect of the fitting on a vehicle), is in contact at every moment with the rolling surface. The footprint typically has a substantially null curvature (or substantially infinite curvature radius), or in any case it substantially assumes the conformation of the rolling surface.

There have been proposed tyres for vehicles comprising monitoring devices of one or more physical quantities arranged in the inner cavity of the tyre, for example as described in US 2014/0118134 A1; US 4,862,486; US 5,749,984; US 5,960,844; US 5,977,870; US 2008/0303634 A1; US 2009/0134710 A1; US 2010/0007477 A1, DE102012007071 A1, WO2007/121768 A1, WO2007/048621 A1, WO2013/098711 A1, WO2013/098712 A1, WO2018/065846 A1, US 2007/0013503 A1, US 2010/0271191 A1, US 2015/0097662 A1, US20180257442A1.

### Summary of the invention

In the context of tyres comprising monitoring devices arranged in the inner cavity of the tyre, the Applicant has made the following considerations.

It is preferable to detect the desired physical quantity, in particular the temperature, the deformation or the acceleration, directly onto the, or near to the, inner surface of the tyre at its crown portion. For example, it is preferable to acquire the temperature near to the inner surface of the crown portion, since in this way it is substantially acquired the actual temperature of the tyre material in the area in which the stresses, which tend to heat the tyre during the rolling, develop. On the contrary, the temperature for example near to the rim or the temperature of the fluid in the inner cavity can be very different from the temperature of the inner surface of the crown portion. Moreover, when the temperature is acquired for example near to the rim or to the inflation valve, the measured data is influenced by the temperature of the environment outside the wheel due to the heat conduction and/or to the presence of external heat sources such as air flows coming from the radiators or the brake discs.

In the case of the acceleration or of the deformation, it is preferable a direct measurement of at least one of the radial, tangential and axial components of the acceleration or of the deformation undergone by an arbitrary point located onto the inner surface of the crown which is subjected to stress and deformation due to the cycle of entry and exit from the footprint, or more generally from the interaction between the tyre and the rolling surface. In this way it is possible to obtain from the detected acceleration or deformation signal information about the status and/or instantaneous behaviour of the tyre during use (e.g. size of the footprint, wear, hydroplaning, slippage, etc.). Therefore it is desirable to apply the acceleration and/or deformation sensor, or sensors, to a point close to where the greatest stresses are generated, i.e. close to the contact between the tyre and the rolling surface, such as typically a point on the inner surface of the crown portion for example placed at the central rib arranged in the axially central region of the tread, or in any case in a point on the inner surface of the crown portion corresponding to the most (both mechanically and thermally) stressed area of the tread during the tyre rolling.

For the making of the monitoring device a PCB ('Printed Circuit Board') technology is typically used, based on a rigid support, on which the circuit tracks (electrically conductive metal tracks) are printed and the electronic components are fixed through the respective electric connections (e.g. "tabs") by welding and, possibly, adhesives. In this way the electric and mechanical connections between the various electric and electronic components and the rigid support are realized. Typically, the rigid support (PCB) comprises one or more layers of a base material, such as glass fibre, impregnated with a (e.g. epoxy) resin.

Furthermore, for the operation of the monitoring device it is usual to provide an electric energy accumulator, for example a coin cell battery, in which the material able to supply the electric energy is stored in (and protected by) a metal rigid casing with substantially cylindrical shape.

Such batteries typically have, depending on the storage capacity (typically from about 50 mAh to about 600 mAh), a thickness (i.e. the height of the cylinder) which goes from 2,5 mm and above (up to 5 mm and more) and a diameter which goes from about 12 mm up to about 25 mm (for a plan surface in the range of about 120-500mm²). The weight of these conventional batteries goes from a minimum of 0.8g for the smaller batteries up to 6g or 7g for those with bigger capacity. Therefore, the weight per unit of plan surface of these batteries goes from about 6*10⁻³ g/mm² to about 15*10⁻³ g/mm².

For example, a coin cell battery of the CR2032HR type has an electric charge capacity of about 200-250 mAh, weight of about 3g concentrated in a circular area of about 20mm of diameter (for a weight per unitary plan surface of about 9.55*10⁻³ g/mm²), and thickness of about 3,2 mm; a coin cell battery of the CR 2450HR type has an electric charge capacity of 540mAh, weight of 6.8 g, and dimensions (diameter x thickness) 24,5x5mm (i.e. a weight per unitary plan surface of about 14,4*10⁻³ g/mm²).

In order to make the monitoring device inside of the tyre slightly invasive, the prevalent tendency is to make the overall monitoring device itself as compact as possible, as for example described in WO2018/065846 A1.

For example, a used solution envisages to superimpose on each other, appropriately connected, a coin cell battery and the PCB with all the electronic components fixed on it, and to encapsulate the whole with an encapsulating material (e.g. polymeric resin), possibly inside a rigid containment body. Furthermore, a housing can be provided (for example made of elastomeric material) to couple the device to the surface of the tyre. The coupling can be performed by an attachment patch to the surface of the tyre and/or one or more adhesives. The set of these structures (rigid support, containment body, encapsulant, housing) takes to a total overall weight of the entire monitoring device which can reach 8-15g, almost all located in a small area, equal to the plan surface of the containment body (for example, inscribed in a circle with diameter of 18-30mm), as well as to a relatively high overall height (for example 12-15mm) of the device.

The Applicant, in conducting tests at very high rotation speeds of the tyre (corresponding to extreme linear speeds of a corresponding vehicle, for example over 300km/h) with a monitoring device thus realized and fixed to the inner surface of the crown portion of the tyre in the axially central region, has however verified that the aforesaid localized overall mass generates very intense stresses (in particular radial and tangential stresses).

In fact, in the areas of entry and exit from the footprint, due to the corresponding deformation undergone by the tyre, the radial acceleration is greater than in the areas outside the footprint. From experimental measurements, carried out by the Applicant at different speeds, the maximum acceleration at the entry and exit of the footprint is about 1.5 times the radial acceleration outside the footprint. Moreover, in the footprint area, while the radial acceleration becomes zero, a tangential acceleration appears which follows, along the footprint, a trend similar to a sinusoid, whose amplitude has been experimentally determined by the Applicant to be equal to about the half of the radial acceleration at the footprint entry/exit.

According to the Applicant, the acceleration with its rapid and intense variation at high-frequency cycles generates significant cyclic stresses, in radial direction (such as a 'hammering') and in tangential direction (shear), caused by the monitoring device on the tyre structures and/or vice-versa. At the aforesaid extreme speeds, these stresses have as direct consequence a significant and localized overheating of the monitoring device and/or of the tyre at the application point of the monitoring device. Said overheating can significantly distort the reading of the correct operating temperature of the tyre by the monitoring device. Furthermore, said overheating and said mechanical stress and/or the combination of the two effects can lead to a damaging of the monitoring device (or of its components, such as the accumulator), relatively to their structural and/or functional integrity, and/or to their coupling with the inner surface of the tyre (for example decomposition and/or detachment of the adhesive used for applying the device to the inner surface). In more serious cases, said overheating and said mechanical stress and/or the combination of the two effects can lead to the loss of structural integrity of the crown portion of the tyre, even up to the formation of holes (so-called "blisters") at the tread band, caused by the localized decomposition of the tyre compound which subsequently is detached due to the rotational movement of the tyre and/or to the delamination of the tread.

Furthermore, in case of relatively high height of the known monitoring devices, the acceleration, in particular the tangential one, in presence of the inertial mass placed at a distance from the surface of the tyre, can generate, under particular use conditions, further stresses on the device in terms of torques that act in particular on the attachment interface of the device to the surface of the tyre. These further stresses can contribute to the aforesaid overheating and/or to the aforesaid damage of the monitoring device and/or of the tyre, and/or of the coupling with the inner surface of the tyre.

The Applicant has therefore faced the problem of realizing a monitoring device of at least one physical quantity (for example temperature, and/or pressure and/or acceleration and/or deformation) to be directly applied close to the inner surface of the crown portion of a tyre, capable of avoiding or limiting the localized overheating and the consequent risk of detecting an incorrect temperature value and/or of loss of structural or functional integrity of the tyre and/or of the monitoring device, also including its adhesion to the surface, even at very high rotation speeds of the tyre and/or in extreme use conditions, which are reached for example in the motor racing competitions.

The Applicant has discovered that a larger and thinner accumulator than the conventional accumulators and which is interposed between the electronic unit and the inner surface, can not only perform the conventional power supply function, but also a structural function in the whole of the monitoring device. In fact, such an accumulator can act as structural element that allows a stable and long-lasting fixing of the monitoring device to the inner surface, even in absence of the aforesaid further structures (containment body, encapsulant, housing). The consequent reduction of the overall mass of the monitoring device and/or of its height entails a reduction of the stresses above described and of the harmful effects that follow.

According to an aspect the invention relates to a tyre comprising a monitoring device according to claim 1.

By 'accumulation device' it is meant an electric power accumulator or a combination of electric power accumulators (for example one or more electrochemical accumulators), in which the electric power to be supplied is accumulated (for example pre-accumulated) in such a way that, once the device is connected to an external electric circuit, it is capable to supply electric power. Typical example of accumulator is an electric battery.

By 'plan surface' of an element it is meant the surface extension of the element in plan view (i.e. seen perpendicularly to the inner surface of the tyre), possibly excluding secondary projections such as the electric contacts of an accumulator.

By 'thickness' or equivalently 'height' of an element it is meant the length along a direction perpendicular to its plan surface (in other words perpendicular to the inner surface of the tyre when the element is fixed to the tyre itself).

The plan surface of the accumulation device greater than about 500 mm², in synergy with the position of the accumulation device interposed between the electronic unit and the inner surface, ensures that the accumulation device can effectively contribute to the fixing of the electronic unit to the inner surface. In fact, the accumulation device offers two faces of relatively wide surface useful to the robust fixing of both, on one side, the electronic unit to the accumulation device (for example with the interposition of a support), and, on the other side, the accumulation device onto the inner surface (for example by gluing). In this way the containment body, the encapsulating material and the housing of the traditional devices are not necessary for the fixing the electronic unit to the inner surface of the tyre, with all the consequent advantages in terms of reduction of the overall weight and of its harmful effects described above. The relatively high attachment surface further contributes to reducing and/or distributing the stresses in radial and/or tangential direction, thereby reducing the deleterious effects described above relating to mechanical hammering and increasing the robustness and/or the duration of the fixing of the monitoring device to the inner surface of the tyre. In addition, it allows reducing the deformation stress transmitted to the electronic unit (and/or to a support of the electronic unit), as well as to obtain a better dissipation of the heat generated on the monitoring device by effect of the rolling.

Furthermore, the reduced thickness of the accumulation device favours the above described fixing function of the electronic unit to the inner surface, since the electronic unit remains sufficiently close to the inner surface, with advantages in terms of detection of the physical quantity and/or of limitation of the inertial stresses described above.

In the comparative case of use of conventional coin cell batteries as in the known devices (e.g. as in WO2018/065846 A1), the attempt to reduce the weight of the battery itself would lead to opting for small batteries, for example of the BR1225A type, having capacity of 48mAh, weight of 0.8 g, and dimensions of 12.5 mm of diameter and of 2.5 mm of thickness. However, the Applicant has found that these batteries are not suitable to be interposed between inner surface and electronic unit for the mutual fixing, due to the reduced extension of their faces (about 120mm²) and/or of the relatively high thickness. Therefore, the fixing of the electronic unit to the inner surface would require additional structural elements, with the consequent complications in terms of weight and/or structural and/or manufacturing complexity.

Or, again in the comparative case of using conventional coin cell batteries in the known devices, the attempt to enlarge the surface of the accumulation device useful for the fixing of the electronic unit to the inner surface would lead to selecting big batteries, for example of the above said CR2450HR type. However, the Applicant has found that even these batteries are not suitable to be interposed between inner surface and electronic unit for the mutual fixing, due to the excessive thickness which tends to remove the electronic unit from the inner surface. According to the Applicant, this distance between the various components of the electronic unit, having a nonnegligible mass, and the inner surface, generates, especially in the aforesaid extreme use conditions, strong stresses on the monitoring device. For example, when the device is in the footprint area, the above described tangential acceleration, together with the inertia of the electronic components, can lead, in particular conditions, to the generation of torques which overall act on the monitoring device and/or on its components. These torques can cause damages to the components of the monitoring device and/or their detachments from the connection tracks and/or detachments between electronic unit and battery or between battery and inner surface.

The present invention can have one or more of the following preferred features. Preferably, said accumulation device comprises, or consists of, one or more distinct accumulators.

In one embodiment, said accumulation device consists of one and only one accumulator.

In one different embodiment, said accumulation device comprises, or consists of, a plurality of distinct accumulators, preferably two and not more than two distinct accumulators. Preferably said accumulators are connected to each other in parallel (to the purposes of summing the available electric capacity). Said accumulators can be arranged side by side on the inner surface and/or stacked along a direction perpendicular to said inner surface, to form a stack (or even more stacks placed side by side) of accumulators. In case of a single stack, the plan surface of the accumulation device corresponds to the plan surface of one accumulator (e.g. of the largest accumulator). Preferably, a first accumulator in said stack of accumulators is (directly) fixed to said inner surface.

Preferably said accumulation device (more preferably each accumulator) has a plan surface greater than or equal to about 600mm², even more preferably greater than or equal to about 700mm². In this way, the resistance and/or the duration of the attachment to the inner surface is further improved, and/or the radial and/or shear stresses are further reduced.

Preferably said accumulation device (more preferably each accumulator) has a weight lower than or equal to about 3 g, more preferably lower than or equal to about 2 g. Given the above explained plan surface, this implies that the weight per unit of plan surface of the accumulation device is preferably less than or equal to about 6×10⁻³ g/mm² (compared to a weight per unit of plan surface of the conventional coin cell batteries typically always greater than or equal to 6×10⁻³ g/mm²). More in general, preferably said monitoring device and/or said accumulation device has a weight per unit of plan surface lower than or equal to about 8×10⁻³ g/mm², more preferably lower than or equal to about 7×10⁻³ g/mm². From this it can be inferred that the present invention allows distributing the weight of the accumulator and/or the whole device over a relatively large area, with the abovesaid advantages.

Preferably said accumulation device (more preferably each accumulator) has a thickness lower than or equal to about 1,5 mm, even more preferably lower than or equal to about 1,0 mm, for example lower than or equal to about 0,8 mm. In this way the aforesaid inertial pair stresses are reduced.

In general, without prejudice to the above cited geometric features, the greater the volume of the accumulation device the greater the available electric charge/power. Preferably said accumulation device (more preferably each accumulator) has an electric charge capacity greater than or equal to about 20 mAh, more preferably greater than or equal to about 25 mAh.

Preferably said accumulation device (more preferably each accumulator) has a length along a first plan direction greater than or equal to about 15 mm, more preferably greater than or equal to about 20 mm, and/or lower than or equal to about 40 mm. Preferably said accumulation device (more preferably each accumulator) has a width along a second plan direction perpendicular to the first direction greater than or equal to about 20 mm, more preferably greater than or equal to about 25 mm, and/or lower than or equal to about 60 mm. These dimensions have been proven to be very suitable to perform the aforesaid function of weight distribution and/or of attachment to the inner surface.

Preferably said accumulation device (more preferably each accumulator) is, more preferably plastically (i.e. not elastically), foldable. In this way the accumulator can, even instantly, adapt to the conformation of the inner surface of the tyre to which it is attached. For the purposes of the present description and of the claims that follow, by "foldable device" it is generally meant a device able to conform - at room temperature - to a curved surface, and in particular to a cylindrical surface with radius lower than the normal curvature radius of a tyre inflated to its nominal pressure (for example a cylindrical surface with radius of 200 mm, preferably 100 mm), without losing functionality or with a functionality loss of no more than 10% (for example in terms of voltage supplied and/or of stored capacity), as well as maintaining the ability to return to assume substantially the original shape when subjected to a contrary force.

Preferably the monitoring device comprises a support made in a single body, wherein said electronic unit is fixed to a first face of said support and said accumulation device is fixed to a second face of said support, opposite to the first face. In other words, said support is interposed between said electronic unit and said accumulation device, and said accumulation device is interposed between said support and said inner surface. In this way it is possible to make the electronic unit onto the support and then couple the support to the accumulation device, with several advantages in terms of efficiency of the industrial production.

Preferably said support is flexible. According to the Applicant, the use of a flexible support allows the overall mass of the monitoring device to be reduced, with respect to a rigid support provided with significant mass (such as the PCB, replaced by the flexible support). Furthermore, the flexible support can be better compatible with some manufacturing technologies of electronic devices such as those better specified below.

For the purposes of the present description and of the claims that follow, by "flexible support" it is generally meant a support made of a material (including a composite/layered material) which, if used for the making of a square-shaped sheet with side significantly greater than the circumferential extension of the area of entry or exit from the footprint area of a tyre (for example a sheet with surface of 120 mm × 120 mm) and with thickness equal to the support, allows this sheet to conform - at ambient temperature - to a cylindrical surface with radius lower than the normal curvature radius of a tyre inflated to its nominal pressure (for example a cylindrical surface with radius of 200 mm, preferably 100 mm, more preferably 50) without breaking or undergoing a permanent deformation.

Preferably said flexible support is substantially inextensible. In this way the shear stresses are distributed and/or the stresses on the tracks of the connection circuit are limited.

For the purposes of the present description and of the claims that follow, by "non extensible support" it is generally meant a support with a thickness comprised between about 10 µm and about 400 µm, preferably between about 50 µm and about 200 µm, made with a material (including a composite/layered material) having tensile elastic modulus preferably higher than 0.1 GPa, more preferably 0.5 GPa, at 23°C.

Preferably said flexible support is a film of an elastomeric or thermoplastic material selected in the following group: nylon, PET, PEN, polyimide, EPDM, diene polymers and polyurethane resins. Paper substrates can be also used, or thin sheets in epoxy resin (possibly reinforced, for example with fiberglass) or super-thin and therefore flexible silicon sheets (or another semiconductor). These flexible supports have proved to be suitable for technologies in which the electric connection circuit is printed or deposited onto the flexible support or chemically etched, and the pre-fabricated electronic components are fixed, and electrically connected, to the electric connection circuit by bonding with conductive adhesives (for example adhesives loaded with conductive particles such as silver, copper or carbon particles) and/or by welding, for example with tin or its alloys (for example tin-bismuth).

Preferably said support has a plan surface greater than or equal to 70% of said plan surface of the accumulation device, more preferably greater than or equal to 80% of said plan surface of the accumulation device. In this way, also the support has an extension such as to allow a reduction of the stresses acting on the electronic unit (due to the masses of the electric and electronic components). Furthermore, the contact surface between support and accumulation device useful for the mutual fixing is relatively large. However, it is also contemplated by the present invention that the support is 'concentrated', i.e. with a plan surface much smaller than the accumulation device, leaving the accumulation device the main burden of distributing the weight over a larger surface.

Preferably said support has a plan surface greater than said plan surface of the accumulation device, more preferably greater than or equal to 110% of said plan surface of the accumulation device, and/or less than or equal to 150% of said plan surface of the accumulation device, more preferably less than or equal to 130% of said plan surface of the accumulation device. In this way, the support, especially the flexible one, can completely overlap the accumulation device and also contribute to the fixing of the monitoring device to the inner surface. Furthermore, in this way the support together with the inner surface and/or the first adhesive layer (of which below) seals the accumulation device within a casing which, in addition to improving the overall robustness of the device, protects the accumulation device from dirt and/or external agents.

Typically, the monitoring device comprises an electric connection circuit for connecting the accumulation device to said electronic unit, wherein said electric connection circuit comprises at least two separate electric paths (one for the connection to the positive pole and one for the connection to the negative pole of the accumulation device or of the accumulators).

Preferably the support is provided with one or more, typically two, through openings along a direction perpendicular to said inner surface, wherein the accumulation device is electrically connected to said electric connection circuit through said one or more through openings. Preferably a conductive adhesive pass through said one or more through openings to establish said electric connection. In this way the monitoring device remain compact and the electric connection is stable.

Preferably the electric connection circuit is fixed onto (said first face of) said support, more preferably printed onto (said first face of) said (flexible) support with a conductive ink, even more preferably printed with serigraphic, lithographic, by ink jet, etc. technology. In one embodiment the electric connection circuit comprises copper conductive tracks, preferably obtained by chemical etching of a thin layer (e.g. few microns or few tens of microns) of copper. These technologies are particularly suitable for flexible substrates and are capable of creating conductive tracks resistant to flexion.

In one embodiment, wherein said accumulation device comprises at least one containment body in dielectric material, it is possible to make the electric connection circuit and connect the electronic unit directly onto an outer surface of said containment body (for example by any of the above described techniques for the manufacturing of the circuits).

Preferably said at least one sensor is suitable for detecting at least two of the following physical quantities: temperature, pressure, deformation, acceleration, for example temperature and pressure. Even more preferably said at least one sensor is suitable for detecting at least three of, or all four, said physical quantities. Preferably said at least one sensor is suitable for detecting at least said acceleration and/or said deformation, more preferably at least a radial component and/or a tangential component of said acceleration and/or of said deformation. In this way the monitoring device provides particularly useful data for obtaining the status and/or the operation of the tyre, and/or the behaviour of the vehicle on which it is fitted.

Preferably one or more of said at least one sensor, said processing unit and said transceiver is a pre-fabricated electronic component. This pre-fabricated electronic component can be (directly) fixed, and electronically connected, to the electric connection circuit, for example by bonding with conductive adhesives and/or by welding.

In one embodiment one or more of said at least one sensor, said processing unit and said transceiver is directly made in situ onto the flexible support (i.e. it is not pre-fabricated), for example by printing or deposition technologies.

Preferably at least two among said sensor, said processing unit and said transceiver, more preferably all three, are arranged in a single assembly, preferably pre-fabricated (for example by means of a containment body which houses at least partially said at least two among said sensor, said processing unit and said transceiver). In this way the making of the monitoring device is significantly simplified. Preferably the equatorial plane of the tyre intersects said monitoring device, more preferably intersects said electronic unit, for example at said sensor. In this way the device (preferably the sensor) is applied in a portion of the tyre subject to the greatest stresses and - therefore - of greater interest in the case of (e.g. accelerometric) signal measurements by which detecting information on the status and/or on the instantaneous behaviour of the tyre during the use.

The Applicant has discovered that the above type of first adhesive layer acts as a decoupling element between the accumulator and the inner surface of the tyre. This decoupling element is able to withstand, in particular, the composed dynamic shear stresses that are generated (in different directions) due to the cyclic deformation that the tyre undergoes at the footprint. In practice, it appears to act as a substrate that withstands these shear stresses so as to cyclically deform (e.g. stretch and/or shorten) without breaking, so as to reduce or cancel the stresses transmitted towards the accumulator and generated by the deformations of the inner surface, and/or withstand the stresses transmitted by the accumulator and generated by the inertial effects due to the masses of the accumulator itself and/or of the further components of the monitoring device. This has allowed obtaining excellent adhesion conditions of the monitoring device to the inner surface of the tyre, without significant detachments, even in presence of inextensible accumulators.

Exemplarily said dynamic shear stress is calculated according to the standard ASTM D-1002.

Preferably said dynamic shear stress is greater than 150 kPa, for example comprised between 50 and 3000 kPa.

In a first embodiment, the first adhesive layer can be an acrylic double-sided tape comprising a viscoelastic acrylic foam with a thickness equal to or greater than about 0.4 mm. Useful examples are represented by the 3M^{™} VHB^{™} adhesive tapes of the 4941 family, of the 4956 family and of the 5952 family, or by the 3M^{™} adhesive tapes of the RP45 family and of the RP62 family, or by the Nitto Hyperjoint adhesive tapes of the H8004-H8008-H8012-H9004-H9008-H9012 family. These tapes consist of a conformable acrylic foam which is adhesive on both sides. In order to increase the adhesion, a PSA acrylic adhesive (for example, the 3M^{™} 9469, 3M^{™} 468, 3M^{™} 93430 or Nitto 5925 adhesives) can be further applied to one or both the surfaces of the aforesaid tapes.

Alternatively, the first adhesive layer may be an acrylic double-sided tape comprising a substrate of expanded polymeric material (or even in form of gel) with a thickness equal to or greater than about 0.4 mm, such as for example an expanded EPDM rubber or an expanded polyurethane, made double-sided by means of acrylic adhesive layers spread on both surfaces of the substrate. The expanded EPDM rubber derives from a family of synthetic rubbers obtained by copolymerization of ethylene and propylene in presence of an expanding agent, generally hydrocarbons, CO2 or other mixtures. Likewise, the expanded polyurethane derives from a family of polymers characterized by the presence of urethane bonds (-N-CO-O-) and obtained by reacting in presence of an expanding agent of di-, tri-, poly-isocyanates with a polyol, typically a polyether polyol, obtained by polymerization of an epoxide, or a polyester polyol, obtained by polycondensation of multifunctional carboxylic acids and polyhydroxy compounds. In both cases, a soft spongy material is obtained comprising closed or open cells inside characterized by a density comprised between 10 and 800 kg/m³, preferably between 20 and 700 kg/m³. Non-limiting examples of expanded EPDM rubber useful for the purposes of the present invention available on the market are represented by layers of expanded EPDM rubber produced by the company Tekspan Automotive, such as for example a layer of EPDM SE30 rubber (for example made double-sided by PSA acrylic adhesives arranged on both the surfaces of the layer).

Non-limiting examples of expanded polyurethane useful to the objects of the present invention available on market are represented by layers of expanded polyurethane of the Cirene line produced by the company Cires SpA, such as for example the layers of expanded polyurethane Cirene 20, 25 and 30 (for example made double-sided adhesive by means of PSA acrylic adhesives arranged on both the surfaces of the layer), and by the 3M^{™} adhesive tapes of the "Double Coated Urethane Foam Tapes" 4004-4008-4016-4026-4032-4052-4056-4085 family.

Further useful examples of first adhesive layer are represented by an acrylic double-sided tape comprising at least one layer of acrylic adhesive layer with a thickness equal to or greater than about 0.4 mm such as, for example, the 3M^{™} adhesive tapes of the Extreme Sealing 4411 and 4412 family, made double-sided by a PSA acrylic adhesive (for example 3M^{™} 9469, 3M^{™} 468, 3M^{™} 93430 or Nitto 5925 adhesives).

The thickness of the first adhesive layer, comprehensive of the adhesive layers deposited on its surfaces, is preferably comprised between about 0.4 and 2.4 mm, more preferably between about 0.6 and 2.2 mm, even more preferably between about 0.8 and 2.0 mm, and advantageously between about 1.0 and 1.8 mm.

The other dimensions of the first adhesive layer, length and width, depend on the dimensions of the accumulation device. The length and width of the first adhesive layer are preferably at least equal to the length and width of the accumulation device, more preferably they are greater than, respectively, the length and/or the width of the accumulation device (and/or of the support of the electronic unit). Advantageously, the length and/or width of the first adhesive layer respectively exceed the length and width of the accumulation device (and/or of the support of the electronic unit) on both sides for an overall exceeding of at least about 0.5 mm, preferably of at least about 2 mm, and more preferably of an interval comprised between about 3 and 5 mm.

There are no particular limitations to the features of any adhesive used for the first adhesive layer, provided that it is resistant to the operating temperatures expected for the tyre, typically included within a wide range that can goes from about -40°C for winter uses up to about 150-160°C for sports use.

Preferably the monitoring device comprises a second adhesive layer interposed between said support and said accumulation device to fix said support to said accumulation device. Preferably said second adhesive layer comprises (or consists of) a pressure-sensitive acrylic adhesive, or PSA (for example the 3M^{™} 9469, 3M^{™} 468, 3M^{™} 93430 o Nitto 5925 adhesives). Preferably, in case the accumulation device comprises a plurality of accumulators, the monitoring device comprises a respective further adhesive layer, preferably having the features of said second adhesive layer, interposed between each pair of accumulators adjacent to each other.

Preferably the monitoring device comprises a protective film (for example a film of polymeric material) for covering and protecting the components of the device (electronic devices, conductive tracks, accumulator, etc.).

### Brief description of the drawings

- figure 1 shows a schematic, perspective and partial view of a tyre section comprising a monitoring device according to the present invention;
- figure 2 shows a schematic and partial plan view of the monitoring device according to the present invention;
- figure 3 shows a schematic and partial section view of the monitoring device along the line A-A of figure 2.

### Detailed description of some embodiments of the invention

The features and advantages of the present invention will be further clarified by the following detailed description of some embodiments, presented by way of non-limiting example of the present invention, with reference to the attached figures.

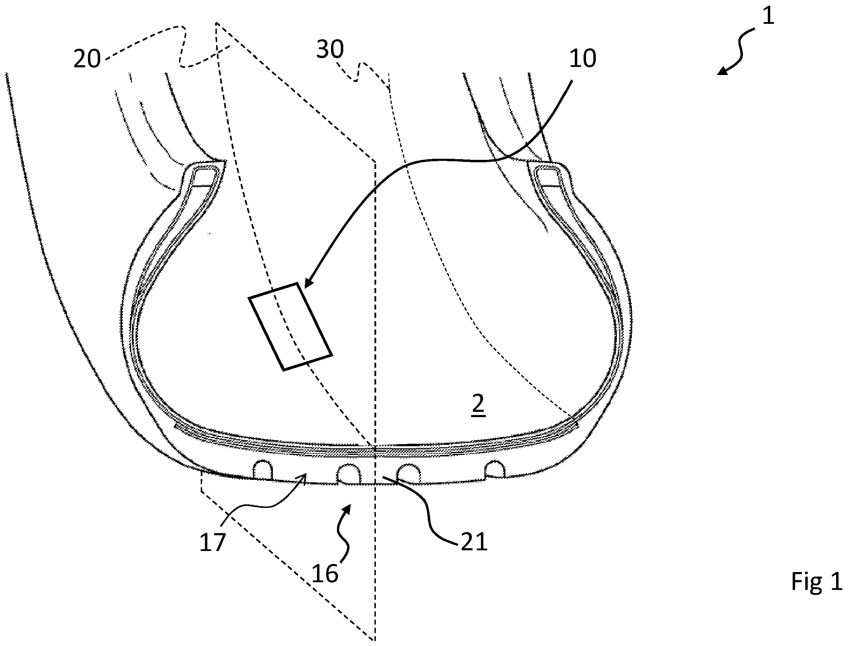

In figure 1 with reference number 1 it is shown a tyre (in partial perspective section) comprising a monitoring device 10 according to the present invention fixed onto the inner surface 2 of the tyre at a crown portion 16 of the tyre (i.e. the portion of the tyre at the tread band 17). The dashed line 30 schematically and arbitrarily indicates a boundaries line between the crown portion 16 and a sidewall of the tyre. All the figures are shown not in scale and with purely illustrative purpose.

The monitoring device 10 comprises an electronic unit 11 comprising at least one sensor for detecting at least one of the following physical quantities: temperature, pressure, acceleration, deformation; a processing unit; a transceiver. The electronic unit 11 is only schematically shown in the figures.

The monitoring device 10 comprises an accumulation device 12 electrically connected to the electronic unit to electrically supply the electronic unit, fixed to the inner surface 2 so that it is interposed between the inner surface 2 and the electronic unit 12.

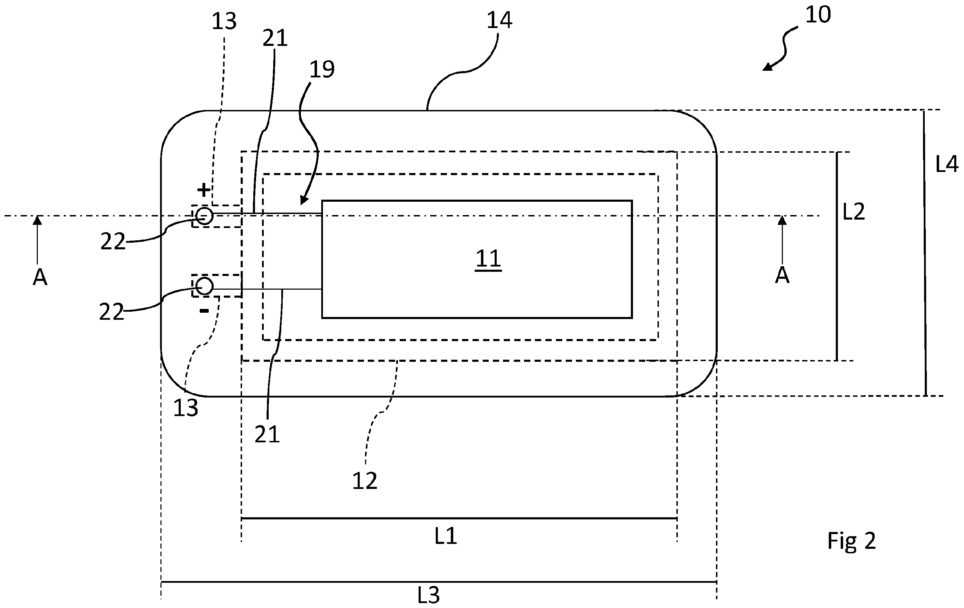

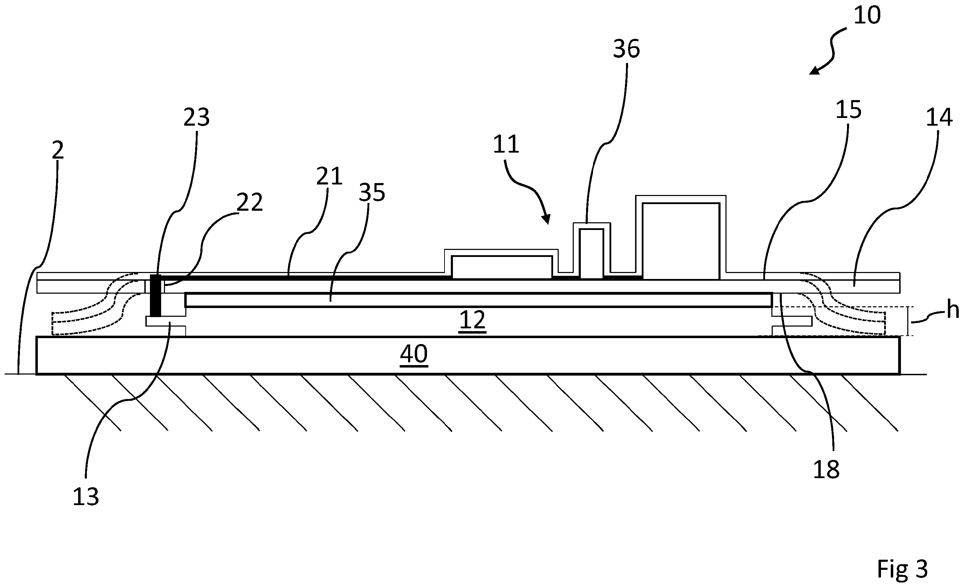

In the embodiment exemplarily shown in figures 2 and 3, the accumulation device 12 consists of one and only one accumulator.

However, the present invention also contemplates, not shown, embodiments in which the accumulation device comprises, or consists of, a plurality of distinct accumulators. Preferably the accumulators are placed side by side onto the inner surface and/or stacked along the direction perpendicular to the inner surface 2, to form one or more accumulator stacks. Preferably the plurality of accumulators comprises two and no more than two accumulators.

Exemplarily the single accumulator is a primary (i.e. non-rechargeable) electric battery marketed by BrightVolt^{™} having a lithium metal anode, a manganese dioxide cathode and a polymeric electrolyte (classifiable among the so-called "lithium-ion polymer batteries"), with nominal voltage of 3V, a rectangular shaped plant and a maximum thickness h of about 0.5mm, according to the present invention. The battery has a casing made of two foldable aluminium sheets and is itself foldable without appreciable functionality loss.

In one version, having capacity of 35 mAh and weight=0.61g, the length L1 and width L2 (excluding the contact tabs 13) are respectively equal to 23mm and 45mm, for a plan surface equal to 1035 mm² and a weight per unit of plan surface equal to about=0.59×10⁻³ g/mm².

In one further version, having capacity of 25 mAh and weight=0.43g, the length L1 and width L2 (excluding the contact tabs 13) are respectively equal to 22mm and 29mm, for a plan surface equal to 638 mm² and a weight per unit of plan surface equal to about=0.67×10⁻³ g/mm².

Preferably the monitoring device 10 comprises a support 14 made in a single body, wherein the electronic unit 11 is fixed to a first face 15 of the support 14 and the accumulation device 12 is fixed to a second face 18 of the support 14, opposite to the first face 15. Exemplarily the support 14 is a, flexible and inextensible, film of thickness equal to 127µm made of polyimide (e.g. Kapton^{™} by DuPont^{®}). Alternatively, polyester support of thickness of 125µm are commercially available by Teijin^{®} with the trademark Teonex^{™}.

Exemplarily the support 14, in the undeformed configuration (i.e. stretched as exemplarily shown in continuous line in figures 2 and 3) has rectangular plan shape, wherein the length L3 and width L4 exceed respectively the length L1 and the width L2 of the accumulation device on both sides of about 3mm. In figure 3 the dashed lines show in a purely schematic way the peripheral portion of the support 14 folded up to the first adhesive layer 40, to wind the accumulation device 12. In an embodiment not shown, the excess of the length L3 and width L4 is such as to allow the support to completely wind also the first adhesive layer 40 and to contact the inner surface 2.

In one alternative, not shown, embodiment the length L3 and width L4 of the support 14 (with rectangular plan) are respectively shorter than the length L1 and the width L2 of the accumulation device on both sides (for example by about 3mm). In this way the support entirely rests on the accumulation device.

The monitoring device 10 comprises an electric connection circuit 19 (only schematically shown in figures 2 and 3) for connecting the accumulation device 12 to the electronic unit 11, wherein the electric connection circuit 19 comprises at least two separate electric paths 21. Preferably the support 14 is provided with one or more, typically two, through openings 22 for the electric connection between the contact tabs 13 of the accumulation device 12 and the electric connection circuit 19. Preferably a conductive adhesive 23 (e.g. Henkel 3104 WXL) passes through each through opening to establish the electric connection.

In one embodiment, the tracks of the electric connection circuit 19 are made with a conductive ink (e.g. silver conductive ink DuPont^{®} 5025) directly printed on the first face 15 of the flexible substrate 14, for example with serigraphic technique.

The electronic unit 11 comprises (not shown) at least one sensor for detecting at least one of the following physical quantities: temperature, pressure, acceleration; a processing unit and a transceiver. As an example, the electronic unit can comprise a pre-fabricated assembly model FXTH870911DT1 sold by NXP Semiconductors^{®}, comprising a processing unit and a plurality of sensors suitable for detecting all the three physical quantities: temperature, pressure and acceleration. This assembly also comprises an RF transceiver with transceiver frequency of 315-434 Mhz. In an exemplary embodiment, it can be used a further transceiver fixed to the flexible support separately from the aforementioned assembly, usable on a different frequency band (for example with Wifi or Bluetooth^{®} technology).

Preferably the device 10 is applied onto the inner surface 2 of the tyre so that the equatorial plane 20 of the tyre intersects the monitoring device 10, more preferably intersects the electronic unit 11 (for example so that the sensor is at or near the central relief 21 of the tread 17).

Preferably the tyre comprises a first adhesive layer 40 interposed between the accumulation device 12 and the inner surface 2 for fixing the accumulation device (and therefore the whole monitoring device) to the inner surface 2 of the tyre. Exemplarily the first adhesive layer 40 consists of a 3M^{™} VHB^{™} adhesive tape of the 4941 family, of the 4956 family or of the 5952 family.

Preferably the monitoring device comprises a second adhesive layer 35 interposed between the support (at its second face 18) and the accumulation device 12 for fixing the support to the accumulation device. Preferably the second adhesive layer comprises (or consists of) a PSA acrylic adhesive (for example the 3M^{™} 9469, 3M^{™} 468, 3M^{™} 93430 or Nitto 5925 adhesives) or a structural adhesive (e.g. Cyberbond 2263, Henkel^{®} LOCTITE^{®} 312^{™}).

Preferably the monitoring device comprises a protective film 36 as top layer, for example a covering nylon layer (e.g. Nylon cast film Domo^{™} Filmon^{™} CSX18), laminated with an acrylic adhesive, or a thermoplastic polyurethane layer (e.g. Covestro^{™} Platilon^{™} U 4201 U or 3M^{™} PPT^{™} 8734), thermally laminated.

## Claims

1. Tyre (1) comprising a monitoring device (10) fixed onto an inner surface (2) of said tyre (1) at a crown portion (16) of said tyre (1),
wherein the monitoring device (10) comprises:
- an electronic unit (11) comprising at least one sensor for detecting at least one of the following physical quantities: temperature, pressure, acceleration, deformation; a processing unit; a transceiver; and
- an accumulation device (12) electrically connected to said electronic unit (11) to electrically supply said electronic unit (11),
wherein said accumulation device (12) is interposed between said inner surface (2) and said electronic unit (11) and it is fixed to said inner surface (2),
wherein the fixing of said accumulation device (12) to said inner surface (2) of the tyre (1) takes place by means of at least one first adhesive layer (40) interposed between said accumulation device (12) and said inner surface (2),
**characterized in that** said accumulation device (12) has a plan surface greater than or equal to about 500 mm² and a thickness lower than or equal to about 2.0 mm,
and **in that** said first adhesive layer is a double-sided adhesive tape comprising (i) a viscoelastic acrylic foam or (ii) a substrate of expanded polymeric material, such as EPDM rubber or polyurethane, or (iii) at least one acrylic-type adhesive layer with a thickness equal to or greater than about 0.4 mm or (iv) combinations thereof, said double-sided adhesive tape being resistant to a dynamic shear stress greater than 50 kPa measured according to the standard ASTM D-1002.

2. Tyre (1) according to claim 1, wherein said accumulation device (12) has a plan surface greater than or equal to about 600mm², wherein said accumulation device (12) has a weight lower than or equal to about 3 g, and wherein said monitoring device (10) and/or said accumulation device (12) has a weight per unit of plan surface lower than or equal to about 8×10⁻³ g/mm².

3. Tyre (1) according to claim 1 or 2, wherein said accumulation device (12) has a thickness lower than or equal to about 1.0 mm.

4. Tyre (1) according to any one of the previous claims, wherein said accumulation device (12) has an electrical charge capacity greater than or equal to about 20 mAh, wherein said accumulation device (12) has a length (L1) along a first plan direction greater than or equal to about 15 mm, and/or lower than or equal to about 40 mm, wherein said accumulation device (12) has a width (L2) along a second plan direction perpendicular to the first direction greater or equal at about 20 mm, and/or lower than or equal to about 60mm.

5. Tyre (1) according to any one of the previous claims, wherein said accumulation device (12) is foldable.

6. Tyre (1) according to any one of the previous claims, wherein said first adhesive layer (40) has a length and/or a width greater than, respectively, a length and/or a width of the accumulation device (12), wherein the length and/or the width of the first adhesive layer (40) respectively exceed/s the length and/or the width of the accumulation device (12) on both sides for an overall exceeding of at least about 0.5 mm, and wherein the first adhesive layer (40) is resistant to operating temperatures going from about -40°C up to about 160°C.

7. Tyre (1) according to anyone of the previous claims, wherein a thickness of the first adhesive layer (40), including any adhesive layers deposited on its surfaces, is comprised between about 0.4 and about 2.4 mm.

8. Tyre (1) according to any one of the previous claims, wherein the monitoring device (10) comprises a support (14) made in a single body, wherein said electronic unit (11) is fixed to a first face (15) of said support (14) and said accumulation device (12) is fixed to a second face (18) of said support (14), opposite to the first face (15).

9. Tyre (1) according to claim 8, wherein said support (14) is flexible, i.e., is made of a material which, if used for making of a square-shaped sheet with side significantly greater than a circumferential extension of an area of entry or exit from a footprint area of said tyre (1) and with thickness equal to said support (14), allows the sheet to conform - at ambient temperature - to a cylindrical surface with radius lower than the normal curvature radius of said tyre (1) inflated to its nominal pressure without breaking or undergoing a permanent deformation, wherein said support (14) is inextensible, i.e., has a thickness comprised between about 10 µm and about 400 µm and is made with a material having tensile elastic modulus higher than 0.1 GPa at 23°C, wherein said flexible support (14) is a film of an elastomeric or thermoplastic material selected in the following group: nylon, PET, PEN, polyimide, EPDM, diene polymers and polyurethane resins, or it is a paper substrate, or a thin sheet in epoxy resin or in silicon or in other semiconductor.

10. Tyre (1) according to claim 8 or 9, wherein said support (14) has a plan surface greater than or equal to 70% of said plan surface of the accumulation device (12).

11. Tyre (1) according to any one of claims from 8 to 10, wherein said support (14) has a plan surface greater than or equal to 110% of said plan surface of the accumulation device (12), and/or lower than or equal to 150% of said plan surface of the accumulation device (12).

12. Tyre (1) according to any one of claims from 8 to 11, wherein the monitoring device (10) comprises an electric connection circuit (19) for connecting the accumulation device (12) to said electronic unit (11), wherein the electric connection circuit (19) is fixed onto said first face (15) of said support (14), wherein the electric connection circuit (19) comprises at least two separate electric paths (21), wherein the support (14) is provided with one or more through openings (22) along a direction perpendicular to said inner surface (2), wherein electric contacts (13) of the accumulation device (12) are electrically connected to said electric connection circuit (19) through said one or more through openings (22), and wherein a conductive adhesive (23) passes through said one or more through openings (22) to establish said electric connection.

13. Tyre (1) according to claim 6 and any one of claims from 8 to 12, wherein the monitoring device (10) comprises a second adhesive layer (35) interposed between said support (14) and said accumulation device (12) to fix said support (14) to said accumulation device (12), wherein said second adhesive layer (35) comprises a pressure-sensitive acrylic adhesive.

14. Tyre (1) according to any one of the previous claims, wherein said at least one sensor is adapted to detect at least two of the following physical quantities: temperature, pressure, deformation, acceleration, and wherein an equatorial plane (20) of the tyre (1) crosses said monitoring device (10).

15. Tyre (1) according to any one of the previous claims, wherein said accumulation device (12) comprises, or consists of, one or more distinct accumulators, wherein said accumulation device (12) consists of one and only one accumulator, or wherein said accumulation device (12) comprises, or consists of, a plurality of distinct accumulators arranged side by side on the inner surface and/or stacked along a direction perpendicular to said inner surface (2) to make one or more stacks of accumulators.

## Patentansprüche

1. Reifen (1), umfassend eine Überwachungsvorrichtung (10), die an eine Innenfläche (2) des Reifens (1) an einem Kronenabschnitt (16) des Reifens (1) befestigt ist,
wobei die Überwachungsvorrichtung (10) Folgendes umfasst:
- eine Elektronikeinheit (11), umfassend mindestens einen Sensor zum Erfassen von mindestens einer der folgenden physikalischen Größen: Temperatur, Druck, Beschleunigung, Verformung; eine Verarbeitungseinheit; einen Sendeempfänger; und
- eine Akkumulationsvorrichtung (12), die elektrisch mit der Elektronikeinheit (11) verbunden ist, um die Elektronikeinheit (11) elektrisch zu versorgen,
wobei die Akkumulationsvorrichtung (12) zwischen der Innenfläche (2) und der Elektronikeinheit (11) angeordnet ist und an der Innenfläche (2) befestigt ist,
wobei die Befestigung der Akkumulationsvorrichtung (12) an der Innenfläche (2) des Reifens (1) durch mindestens eine erste Haftschicht (40) erfolgt, die zwischen der Akkumulationsvorrichtung (12) und der Innenfläche (2) angeordnet ist,
**dadurch gekennzeichnet, dass** die Akkumulationsvorrichtung (12) eine plane Oberfläche, die größer als oder gleich wie etwa 500 mm² ist, und eine Dicke aufweist, die niedriger als oder gleich wie etwa 2,0 mm ist,
und dadurch, dass die erste Haftschicht ein doppelseitiges Klebeband ist, umfassend (i) einen viskoelastischen Acrylschaum oder (ii) ein Substrat aus expandiertem Polymermaterial, wie z. B. EPDM-Kautschuk oder Polyurethan, oder (iii) mindestens eine Haftschicht vom Acryltyp mit einer Dicke gleich wie oder größer als etwa 0,4 mm, oder (iv) Kombinationen davon, wobei das doppelseitige Klebeband beständig gegenüber einer dynamischen Scherspannung von über 50 kPa ist, gemessen gemäß dem Standard ASTM D-1002.

2. Reifen (1) nach Anspruch 1, wobei die Akkumulationsvorrichtung (12) eine plane Oberfläche aufweist, die größer als oder gleich wie etwa 600 mm² ist, wobei die Akkumulationsvorrichtung (12) ein Gewicht hat, das niedriger als oder gleich wie etwa 3 g ist, und wobei die Überwachungsvorrichtung (10) und/oder die Akkumulationsvorrichtung (12) ein Gewicht pro Einheit von planer Oberfläche hat, das niedriger als oder gleich wie etwa 8×10⁻³ g/mm² ist.

3. Reifen (1) nach Anspruch 1 oder 2, wobei die Akkumulationsvorrichtung (12) eine Dicke hat, die niedriger als oder gleich wie etwa 1,0 mm ist.

4. Reifen (1) nach einem der vorhergehenden Ansprüche, wobei die Akkumulationsvorrichtung (12) eine elektrische Ladekapazität hat, die größer als oder gleich wie etwa 20 mAh ist, wobei die Akkumulationsvorrichtung (12) eine Länge (L1) entlang einer ersten planen Richtung hat, die größer als oder gleich wie etwa 15 mm und/oder niedriger als oder gleich wie etwa 40 mm ist, wobei die Akkumulationsvorrichtung (12) eine Breite (L2) entlang einer zweiten planen Richtung senkrecht zu der ersten Richtung hat, die größer als oder gleich wie etwa 20 mm und/oder niedriger als oder gleich wie etwa 60 mm ist.

5. Reifen (1) nach einem der vorhergehenden Ansprüche, wobei die Akkumulationsvorrichtung (12) faltbar ist.

6. Reifen (1) nach einem der vorhergehenden Ansprüche, wobei die erste Haftschicht (40) eine Länge und/oder eine Breite hat, die größer ist als jeweils eine Länge und/oder eine Breite der Akkumulationsvorrichtung (12), wobei die Länge und/oder die Breite der ersten Haftschicht (40) jeweils die Länge und/oder die Breite der Akkumulationsvorrichtung (12) auf beiden Seiten für ein gesamtes Übersteigen von mindestens etwa 0,5 mm übersteigt/übersteigen, und wobei die erste Haftschicht (40) beständig gegenüber Betriebstemperaturen ist, die von etwa -40 °C bis zu etwa 160 °C gehen.

7. Reifen (1) nach einem der vorhergehenden Ansprüche, wobei eine Dicke der ersten Haftschicht (40), einschließlich jeglicher Haftschichten, die auf ihren Oberflächen angeordnet sind, zwischen etwa 0,4 und etwa 2,4 mm ist.

8. Reifen (1) nach einem der vorhergehenden Ansprüche, wobei die Überwachungsvorrichtung (10) einen Träger (14) umfasst, der in einem einzigen Körper hergestellt ist, wobei die Elektronikeinheit (11) an einer ersten Fläche (15) des Trägers (14) befestigt ist und die Akkumulationsvorrichtung (12) an einer zweiten Fläche (18) des Trägers (14) gegenüber der ersten Fläche (15) befestigt ist.

9. Reifen (1) nach Anspruch 8, wobei der Träger (14) flexibel ist, d. h. aus einem Material hergestellt ist, das, wenn es zum Herstellen einer quadratischen Platte mit Seite erheblich größer als eine Umfangserstreckung eines Bereichs des Eintritts oder Austritts aus einer Aufstandsfläche des Reifens (1) und mit Dicke gleich wie der Träger (14) verwendet wird, zulässt, dass sich die Platte - bei Umgebungstemperatur - einer zylindrischen Oberfläche anpasst mit einem Radius, der niedriger als der normale Krümmungsradius des Reifens (1) ist, der auf seinen Normaldruck aufgeblasen ist, ohne beschädigt zu werden oder einer permanenten Verformung unterzogen zu werden, wobei der Träger (14) nicht erweiterbar ist, d. h., er hat eine Dicke zwischen etwa 10 µm und etwa 400 µm und ist hergestellt mit einem Material, das ein Zugelastizitätsmodul hat, das höher als 0,1 GPa bei 23 °C ist, wobei der flexible Träger (14) ein Film aus einem elastomeren oder thermoplastischen Material ist, ausgewählt in der folgenden Gruppe: Nylon, PET, PEN, Polyimid, EPDM, Dienpolymere und Polyurethanharze, oder es ist ein Papiersubstrat oder eine dünne Platte in Epoxidharz oder in Silizium oder in einem anderen Halbleiter.

10. Reifen (1) nach Anspruch 8 oder 9, wobei der Träger (14) eine plane Oberfläche hat, die größer als oder gleich wie 70 % der planen Oberfläche der Akkumulationsvorrichtung (12) ist.

11. Reifen (1) nach einem der Ansprüche von 8 bis 10, wobei der Träger (14) eine plane Oberfläche hat, die größer als oder gleich wie 110 % der planen Oberfläche der Akkumulationsvorrichtung (12) und/oder niedriger als oder gleich wie 150 % der planen Oberfläche der Akkumulationsvorrichtung (12) ist.

12. Reifen (1) nach einem der Ansprüche von 8 bis 11, wobei die Überwachungsvorrichtung (10) eine elektrische Verbindungsschaltung (19) zum Verbinden der Akkumulationsvorrichtung (12) mit der Elektronikeinheit (11) umfasst, wobei die elektrische Verbindungsschaltung (19) an der ersten Fläche (15) des Trägers (14) befestigt ist, wobei die elektrische Verbindungsschaltung (19) mindestens zwei separate elektrische Pfade (21) umfasst, wobei der Träger (14) mit einer oder mehreren Durchgangsöffnungen (22) entlang einer Richtung senkrecht zu der Innenfläche (2) bereitgestellt ist, wobei elektrische Kontakte (13) der Akkumulationsvorrichtung (12) mit der elektrischen Verbindungsschaltung (19) durch die eine oder mehreren Durchgangsöffnungen (22) elektrisch verbunden sind, und wobei ein leitender Klebstoff (23) durch die eine oder mehreren Durchgangsöffnungen (22) verläuft, um die elektrische Verbindung herzustellen.

13. Reifen (1) nach Anspruch 6 und nach einem der Ansprüche von 8 bis 12, wobei die Überwachungsvorrichtung (10) eine zweite Haftschicht (35) umfasst, die zwischen dem Träger (14) und der Akkumulationsvorrichtung (12) angeordnet ist, um den Träger (14) an der Akkumulationsvorrichtung (12) zu befestigen, wobei die zweite Haftschicht (35) einen druckempfindlichen Acrylklebstoff umfasst.

14. Reifen (1) nach einem der vorhergehenden Ansprüche, wobei der mindestens eine Sensor angepasst ist, um mindestens zwei der folgenden physikalischen Größen zu erfassen: Temperatur, Druck, Verformung, Beschleunigung, und wobei eine Äquatorebene (20) des Reifens (1) die Überwachungsvorrichtung (10) kreuzt.

15. Reifen (1) nach einem der vorhergehenden Ansprüche, wobei die Akkumulationsvorrichtung (12) einen oder mehrere verschiedene Akkumulatoren umfasst oder daraus besteht, wobei die Akkumulationsvorrichtung (12) aus einem und nur einem Akkumulator besteht, oder wobei die Akkumulationsvorrichtung (12) eine Vielzahl von verschiedenen Akkumulatoren umfasst oder daraus besteht, die nebeneinander an der Innenfläche angeordnet sind und/oder entlang einer Richtung senkrecht zu der Innenfläche (2) gestapelt sind, um einen oder mehrere Stapel aus Akkumulatoren zu machen.

## Revendications

1. Pneumatique (1) comprenant un dispositif de surveillance (10) fixé sur une surface intérieure (2) dudit pneumatique (1) au niveau d'une partie de sommet (16) dudit pneumatique (1),
dans lequel le dispositif de surveillance (10) comprend :
- une unité électronique (11) comprenant au moins un capteur pour détecter au moins l'une des grandeurs physiques suivantes : la température, la pression, l'accélération, la déformation ; une unité de traitement ; un émetteur-récepteur ; et
- un dispositif d'accumulation (12) relié électriquement à ladite unité électronique (11) pour alimenter électriquement ladite unité électronique (11),
dans lequel ledit dispositif d'accumulation (12) est interposé entre ladite surface intérieure (2) et ladite unité électronique (11) et il est fixé à ladite surface intérieure (2),
dans lequel la fixation dudit dispositif d'accumulation (12) à ladite surface intérieure (2) du pneumatique (1) s'effectue au moyen d'au moins une première couche adhésive (40) interposée entre ledit dispositif d'accumulation (12) et ladite surface intérieure (2),
**caractérisé en ce que** ledit dispositif d'accumulation (12) a une surface plane supérieure ou égale à environ 500 mm² et une épaisseur inférieure ou égale à environ 2,0 mm,
et **en ce que** ladite première couche adhésive est un ruban adhésif double face comprenant (i) une mousse acrylique viscoélastique ou (ii) un substrat de matériau polymère expansé, tel que du caoutchouc EPDM ou du polyuréthane, ou (iii) au moins une couche adhésive de type acrylique d'une épaisseur égale ou supérieure à environ 0,4 mm ou (iv) leurs combinaisons, ledit ruban adhésif double face étant résistant à une contrainte de cisaillement dynamique supérieure à 50 kPa mesurée selon la norme ASTM D-1002.

2. Pneumatique (1) selon la revendication 1, dans lequel ledit dispositif d'accumulation (12) a une surface plane supérieure ou égale à environ 600 mm², dans lequel ledit dispositif d'accumulation (12) a un poids inférieur ou égal à environ 3 g, et dans lequel ledit dispositif de surveillance (10) et/ou ledit dispositif d'accumulation (12) a un poids par unité de surface plane inférieur ou égal à environ 8 × 10⁻³g/mm².

3. Pneumatique (1) selon la revendication 1 ou 2, dans lequel ledit dispositif d'accumulation (12) a une épaisseur inférieure ou égale à environ 1,0 mm.

4. Pneumatique (1) selon l'une quelconque des revendications précédentes, dans lequel ledit dispositif d'accumulation (12) a une capacité de charge électrique supérieure ou égale à environ 20 mAh, dans lequel ledit dispositif d'accumulation (12) a une longueur (L1) le long d'une première direction plane supérieure ou égale à environ 15 mm, et/ou inférieure ou égale à environ 40 mm, dans lequel ledit dispositif d'accumulation (12) a une largeur (L2) le long d'une deuxième direction plane perpendiculaire à la première direction supérieure ou égale à environ 20 mm, et/ou inférieure ou égale à environ 60 mm.

5. Pneumatique (1) selon l'une quelconque des revendications précédentes, dans lequel ledit dispositif d'accumulation (12) est pliable.

6. Pneumatique (1) selon l'une quelconque des revendications précédentes, dans lequel ladite première couche adhésive (40) a une longueur et/ou une largeur supérieure à, respectivement, une longueur et/ou une largeur du dispositif d'accumulation (12) , dans lequel la longueur et/ou la largeur de la première couche adhésive (40) dépasse respectivement la longueur et/ou la largeur du dispositif d'accumulation (12) des deux côtés sur un dépassement global d'au moins environ 0,5 mm, et dans lequel la première couche adhésive (40) est résistante aux températures de fonctionnement allant d'environ -40°C jusqu'à environ 160°C.

7. Pneumatique (1) selon l'une quelconque des revendications précédentes, dans lequel une épaisseur de la première couche adhésive (40), y compris toutes les couches adhésives déposées sur ses surfaces, est comprise entre environ 0,4 et environ 2,4 mm.

8. Pneumatique (1) selon l'une quelconque des revendications précédentes, dans lequel le dispositif de surveillance (10) comprend un support (14) réalisé en un seul corps, dans lequel ladite unité électronique (11) est fixée sur une première face (15) dudit support (14) et ledit dispositif d'accumulation (12) est fixé sur une deuxième face (18) dudit support (14), opposée à la première face (15).

9. Pneumatique (1) selon la revendication 8, dans lequel ledit support (14) est flexible, c'est-à-dire qu'il est réalisé en un matériau qui, s'il est utilisé pour la confection d'une feuille de forme carrée de côté sensiblement supérieur à une extension circonférentielle d'une surface d'entrée ou de sortie d'une zone d'empreinte dudit pneumatique (1) et d'épaisseur égale audit support (14), permet à la feuille de se conformer - à température ambiante - à une surface cylindrique de rayon inférieur au rayon de courbure normal dudit pneumatique (1) gonflé à sa pression nominale sans se casser ni subir de déformation permanente, dans lequel ledit support (14) est inextensible, c'est-à-dire qu'il a une épaisseur comprise entre environ 10 µm et environ 400 µm et est réalisé avec un matériau ayant un module d'élasticité en traction supérieur à 0,1 GPa à 23°C, dans lequel ledit support flexible (14) est un film d'un matériau élastomère ou thermoplastique choisi dans le groupe suivant : le nylon, le PET, le PEN, le polyimide, l'EPDM, les polymères diéniques et les résines de polyuréthane, ou il est un substrat en papier, ou une feuille mince en résine époxy ou en silicium ou en autre semi-conducteur.

10. Pneumatique (1) selon la revendication 8 ou 9, dans lequel ledit support (14) présente une surface plane supérieure ou égale à 70% de ladite surface plane du dispositif d'accumulation (12).

11. Pneumatique (1) selon l'une quelconque des revendications 8 à 10, dans lequel ledit support (14) présente une surface plane supérieure ou égale à 110 % de ladite surface plane du dispositif d'accumulation (12), et/ou inférieure ou égale à 150 % de ladite surface plane du dispositif d'accumulation (12).

12. Pneumatique (1) selon l'une quelconque des revendications 8 à 11, dans lequel le dispositif de surveillance (10) comprend un circuit de connexion électrique (19) pour connecter le dispositif d'accumulation (12) à ladite unité électronique (11), dans lequel le circuit de connexion électrique (19) est fixé sur ladite première face (15) dudit support (14), dans lequel le circuit de connexion électrique (19) comprend au moins deux chemins électriques séparés (21), dans lequel le support (14) est pourvu d'une ou plusieurs ouvertures traversantes (22) le long d'une direction perpendiculaire à ladite surface intérieure (2), dans lequel des contacts électriques (13) du dispositif d'accumulation (12) sont connectés électriquement audit circuit de connexion électrique (19) à travers ladite une ou plusieurs ouvertures traversantes (22), et dans lequel un adhésif conducteur (23) passe à travers lesdites une ou plusieurs ouvertures traversantes (22) pour établir ladite connexion électrique.

13. Pneumatique (1) selon la revendication 6 et l'une quelconque des revendications 8 à 12, dans lequel le dispositif de surveillance (10) comprend une deuxième couche adhésive (35) interposée entre ledit support (14) et ledit dispositif d'accumulation (12) pour fixer ledit support (14) audit dispositif d'accumulation (12), dans lequel ladite deuxième couche adhésive (35) comprend un adhésif acrylique sensible à la pression.

14. Pneumatique (1) selon l'une quelconque des revendications précédentes, dans lequel ledit au moins un capteur est adapté pour détecter au moins deux des grandeurs physiques suivantes : la température, la pression, la déformation, l'accélération, et dans lequel un plan équatorial (20) du pneumatique (1) traverse ledit dispositif de surveillance (10).

15. Pneumatique (1) selon l'une quelconque des revendications précédentes, dans lequel ledit dispositif d'accumulation (12) comprend, ou est constitué par, un ou plusieurs accumulateurs distincts, dans lequel ledit dispositif d'accumulation (12) est constitué par un et un seul accumulateur, ou dans lequel ledit dispositif d'accumulation (12) comprend, ou est constitué par, une pluralité d'accumulateurs distincts agencés côte à côte sur la surface intérieure et/ou empilés le long d'une direction perpendiculaire à ladite surface intérieure (2) pour former un ou plusieurs empilements d'accumulateurs.
